# EUROPÄISCHE PATENTANMELDUNG

(11) **EP 1 315 013 A2**
(43) Veröffentlichungstag der Anmeldung: **28.05.2003**
(21) Anmeldenummer: 02024273.1
(22) Anmeldetag: 31.10.2002
(51) Int. Cl.: G02B 21/22

(54) **Observationseinrichtung für ein stereoskopisches Operationsmikroskop**

(30) Priorität: 02.11.2001 EP 01126116
(71) Anmelder: Möller-Wedel GmbH, 22880 Wedel (DE)
(72) Erfinder: Schmidt, Martin, Dr., 23611 Bad Schwartau (DE); Duis, Wilhelm, 25491 Hetlingen (DE); Bucholz, Richard D., Dr., Ladue, MO 63124 (US)
(74) Vertreter: Glawe, Delfs, Moll & Partner

(57) **Zusammenfassung**

Die Observationseinrichtung für ein stereoskopisches Operationsmikroskop mit Eintrittsanschlüssen (1) für die beiden Strahlengänge (2, 7, 19) vom Operationsmikroskop, mit Einrichtungen (8) zum Anschließen von Beobachtungstuben für den Hauptbeobachter, und mit mindestens einer Projektionseinrichtung (31-35) zum Projizieren von mit mindestens einer Displayeinheit (35) erzeugten Bildern in den/die Beobachtungsstrahlengänge (2, 7, 19), mit mindestens einer Einrichtung zum Anschließen von mindestens einer Videokamera und mit Einrichtungen (10) zum Anschließen von Tuben für einen Mitbeobachter, zeichnet sich dadurch aus, daß in mindestens einem der beiden Strahlengänge ein erster Strahlenteiler (3), dahinter eine schaltbare Blende (4) zum Abschwächen und/oder Unterbrechen des Lichts des Beobachtungsstrahlengangs und dahinter ein optisches Element (21, 23) mit einem zweiten Strahlenteiler (22) angeordnet ist, der das Licht des Beobachtungsstrahlengangs und das Licht von der Projektionseinrichtung (34) in zwei Strahlen für den Beobachtungstubus und für den Mitbeobachtertubus dieses Strahlengangs aufteilt.

## Beschreibung

Die Erfindung betrifft eine Observationseinrichtung für ein stereoskopisches Operationsmikroskop mit Eintrittsanschlüssen für die beiden Strahlengänge vom Operationsmikroskop, mit Einrichtungen zum Anschließen von Beobachtungstuben für den Hauptbeobachter, und mindestens einer Projektionseinrichtung zum Projizieren von mit mindestens einer Displayeinheit erzeugten Bildern in den/die Beobachtungsstrahlengänge, mit Einrichtung zum Anschließen von mindestens einer Videokamera und mit Einrichtungen zum Anschließen von Tuben für einen Mitbeobachter.

Für mikrochirurgische Eingriffe werden regelmäßig Operationsmikroskope eingesetzt, um Operationen an feinen biologischen Strukturen durchführen zu können. Je nach Operation wirken dabei Assistenten mit. Bei bestimmten Operationen, z.B. in der Gehirnchirurgie, befinden sich die Assistenten meist seitlich neben dem Chirurgen, wobei sie sich je nach den Gegebenheiten im Operationssaal entweder links oder rechts von dem Chirurgen befinden. Bei anderen Operationen, z.B. an der Wirbelsäule, stehen oder sitzen die beiden Chirurgen einander gegenüber, jeder auf einer Seite des Operationstisches. Bei allen Operationen ist es jedoch erforderlich, daß eine Videokamera am Operationsmikroskop angebracht ist, die das Operationsgeschehen aufnimmt. Zusätzlich ist es in der Neurochirurgie üblich, daß Daten oder Grafiken eingespiegelt werden, beispielsweise Trajektorien, die bestimmte Navigationsrichtungen andeuten, die in Navigationssystemen erzeugt werden. Es ist auch üblich geworden, daß bestimmte Bilder z.B. von Endoskopen, so in die Okulare eingespiegelt werden, daß diese in einem Teil des Sichtfeldes erscheinen, während der größere restliche Teil des Sichtfeldes weiterhin das Operationsgeschehen zeigt.

Um all diese Forderungen zu erfüllen, ist es heute noch üblich, daß das Operationsmikroskop zwischen den Operationen umgebaut und auf die jeweilige Anforderung der folgenden Operationen konfiguriert wird. Dieser Umbau bedeutet aber einen beträchtlichen Zeitaufwand und birgt das Risiko von Fehlern in der Ausstattung und der Austarierung der Balance des Mikroskopstativs.

Es gibt daher Operationsmikroskope auf dem Markt, die alle Funktionen integriert haben. Diese sind jedoch sehr groß und schwer, außerdem sind die Lichtauslässe für die Mitbeobachter entweder an der Seite des Operationsmikroskops oder der Rückseite ungünstig angeordnet. Für die Einspiegelung von Videobildern in den Strahlengang, z.B. für die Navigation, sind Strahlenteiler erforderlich, die die Lichtstärke des Operationsmikroskops für die Beobachter reduzieren.

Die technische Lösung für die Einspiegelung von Endoskopbildern erfordert entweder ein großes Modul im Bereich der Okulare, das wegen der Nähe zum Chirurgen störend plaziert ist, oder eine Zwischenabbildung im Strahlengang des Operationsmikroskops, die den optischen Strahlenweg und damit das Mikroskop verlängert und zusätzliche Optik verlangt.

Die oben genannten Lösungen haben weiterhin den Nachteil, daß bei multidisziplinärem Einsatz, z.B. an peripheren Nerven oder im HNO-Bereich, die obigen Eigenschaften nicht benötigt werden. Operationsmikroskope, die all diese Eigenschaften enthalten, behindern daher unnötig durch Größe und Gewicht.

Der Erfindung liegt die Aufgabe zugrunde, eine Observationseinrichtung der eingangs genannten Art zu schaffen, die kompakt aufgebaut ist und bei der weniger Lichtverluste als bei vorbekannten Einrichtungen auftreten.

Die erfindungsgemäße Lösung besteht darin, daß in Richtung der Strahlengänge gesehen in mindestens einem der beiden Strahlengänge hinter dem Eintrittsanschlüssen ein erster Strahlenteiler zum Ablenken eines Teils des Lichts des Beobachtungsstrahlengangs in eine Videokamera, dahinter eine schaltbare Blende zum Abschwächen und/oder Unterbrechen des Lichts des Beobachtungsstrahlengangs und dahinter ein optisches Element mit einem zweiten Strahlenteiler angeordnet ist, der das Licht des Beobachtungsstrahlengangs und das Licht von der Projektionseinrichtung in zwei Strahlen für den Beobachtungstubus und für den Mitbeobachtertubus dieses Strahlengangs aufteilt.

In einem oder beiden Strahlengängen ist hinter den Eintrittsanschlüssen für das Licht der Beobachtungsstrahlengänge ein erster Strahlenteiler vorgesehen, der einen Teil des Licht des Beobachtungsstrahlengangs in eine Videokamera auslenkt. Wegen der großen Empfindlichkeit von modernen Videokameras braucht nur ein kleiner Teil des Lichtes von 20%, vorzugsweise 10% seitlich abgelenkt zu werden, wodurch die Lichtintensität im Hauptstrahlengang kaum verringert wird. Hinter diesem ersten Strahlenteiler befindet sich im Strahlengang eine schaltbare Blende zum Abschwächen und/oder Unterbrechen des Lichts des Beobachtungsstrahlengangs. Diese Abschwächung oder Unterbrechung des Lichts des Beobachtungsstrahlengangs ermöglicht es, in den Beobachtungsstrahlengang zusätzlich ein Bild einzuspiegeln oder aber lediglich ein Bild zu erzeugen, das mit der Displayeinheit in dem Strahlengang erzeugt wird. Hinter der Blende ist ein zweiter Strahlenteiler angeordnet, der sowohl das Licht des Beobachtungsstrahlengangs als auch das Licht von der Projektionseinrichtung in zwei Strahlen für den Beobachtungstubus und für den Mitbeobachtertubus dieses Strahlengangs aufteilt. Dieser Strahlenteiler hat also gleichzeitig zwei Funktionen. Es sind nicht zwei separate Strahlenteiler erforderlich, die einerseits mehr Platz beanspruchen würden und andererseits auch zu mehr Lichtverlust führen würden.

Bei einer vorteilhaften Ausführungsform sind in jedem der beiden Strahlengänge hinter dem Eintrittsanschlüssen ein erster Strahlenteiler zum Ablenken eines Teils des Lichts des Beobachtungsstrahlengangs in eine Videokamera, dahinter eine schaltbare Blende zum Abschwächen und/oder Unterbrechen des Lichts des Beobachtungsstrahlengangs und dahinter ein optisches Element mit einem zweiten Strahlenteiler angeordnet ist, der das Licht des Beobachtungsstrahlengangs und das Licht von der Projektionseinrichtung in zwei Strahlen für den Beobachtungstubus und für den Mitbeobachtertubus dieses Strahlengangs aufteilt. Man erhält so wesentlich mehr Möglichkeiten, unterschiedliche Beobachtungsarten zu wählen und zu kombinieren.

Vorteilhafterweise weisen die optischen Elemente, die die zweiten Strahlenteiler enthalten, zwei Prismen auf, die an einer Fläche, die den zweiten Strahlenteiler bildet, miteinander verbunden sind.

Als besonders zweckmäßig hat es sich dabei erwiesen, wenn eines der Prismen ein Bauernfeind-Prisma ist.

Die Blende kann bei einer besonders einfachen Ausführungsform von Hand betätigbar sein, um das Licht des Beobachtungsstrahlengangs abzuschwächen oder zu unterbrechen. Die Blende kann aber auch durch eine elektromechanische Einrichtung betätigbar sein, die einen Elektromagneten, einen Elektromotor, insbesondere einen Schrittmotor aufweisen kann. Eine besonders raumsparende Bauweise erhält man, wenn die ersten Strahlenteiler als geometrische Strahlenteiler ausgebildet sind.

Zur Verringerung des optischen Weg und damit zur Erzielung einer kleineren Baugröße kann zweckmäßigerweise vorgesehen sein, daß zusätzliche Glaselemente in einem oder beiden Strahlengängen vorgesehen sind, wobei zweckmäßigerweise die optischen Elemente diese Glaselemente aufweisen.

Als Displayeinheiten haben sich LCD-Einheiten, insbesondere 0,5 Zoll LCD-Einheiten besonders bewährt.

Die Observationseinrichtung ist besonders vielseitig verwendbar, wenn in dem Strahlengang oder in mindestens einem der Strahlengänge eine drehbare Reflexionseinrichtung vorgesehen ist, mit der das Licht zu einem gegenüber dem Hauptbeobachter angeordneten Mitbeobachtertubus oder zu einer seitlich angeordneten Beobachtungseinrichtung umlenkbar ist. Wenn das Licht zu einem gegenüber dem Hauptbeobachter angeordneten Mitbeobachtertubus gesandt wird, so kann dieser genauso wie der Hauptbeobachter die Vorgänge stereoskopisch beobachten. Wenn das Licht zur Seite abgelenkt wird, kann hier nur jeweils einer der Strahlengänge beobachtet werden. Hier könnte ein Beobachter das Bild ohne die Stereowirkung beobachten. Hier könnte auch eine Kamera angeschlossen werden. Sind zwei solcher Reflexionseinrichtungen vorgesehen, so könnte auf einer Seite eine Kamera angeschlossen werden und auf der anderen Seite ein Beobachtertubus vorgesehen werden. Es wäre auch denkbar, nur einen Strahlengang vom gegenüber angeordneten Mitbeobachtertubus wegzulenken und seitlich z.B. in eine Videokamera zu lenken.

Die Observationseinrichtung ist wie gesagt besonders platzsparend und vergrößert Volumen und Gewicht des Operationsmikroskops nicht wesentlich. Zweckmäßigerweise ist die Observationseinrichtung der Erfindung dabei als demontierbares Modul ausgebildet, so daß das Operationsmikroskop für einfache Zwecke in einer Minimalkonfiguration verwendbar ist.

Die Erfindung wird im folgenden anhand einer vorteilhaften Ausführungsform unter Bezugnahme auf die beigefügten Zeichnungen beschrieben. Es zeigen in schematischer Ansicht:
- Fig. 1: im Schnitt eine Observationseinrichtung der Erfindung von der Seite;
- Fig. 2: teilweise aufgeschnitten die Observationseinrichtung der Fig. 1, die auf einem Mikroskop montiert ist; und
- Fig. 3: die Anordnung der Fig. 2 von oben gesehen.

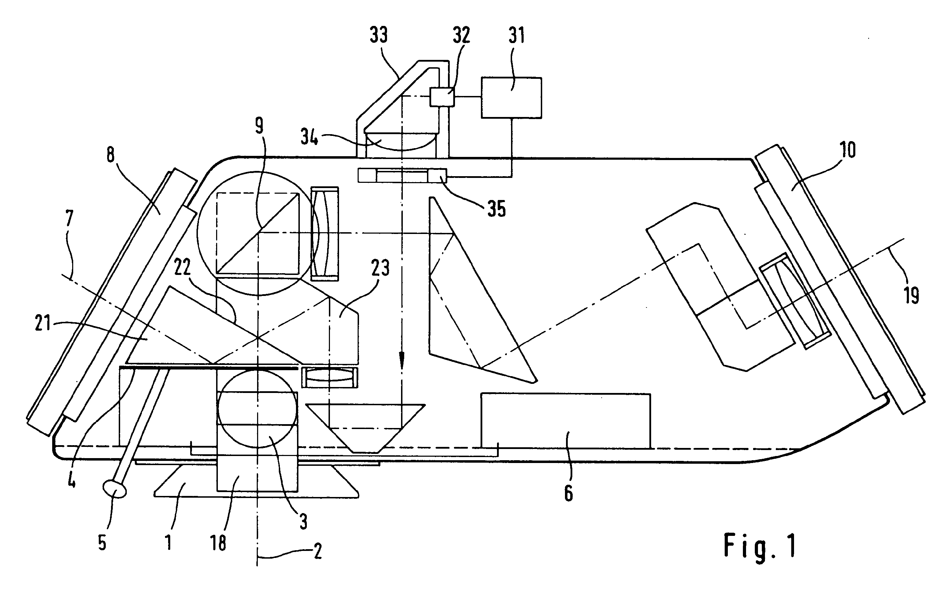

Es wird zunächst auf Fig. 1 Bezug genommen. Die Observationseinrichtung der Erfindung ist mit Eintrittsanschlüssen 1 versehen, in die die beiden Beobachtungsstrahlengänge 2 vom Mikroskop in die Observationseinrichtung eintreten. In Fig. 1 ist jeweils nur ein Strahlengang mit zugehörigen Komponenten gezeigt. Dieser eine Strahlengang weist die optischen Einrichtungen der Erfindung auf. Diese können aber auch im anderen, also in beiden Strahlengängen vorhanden sein. Diskutiert werden soll im folgenden in erster Linie der Fall, daß die Einrichtungen der Erfindung in beiden Strahlengängen vorgesehen sind.

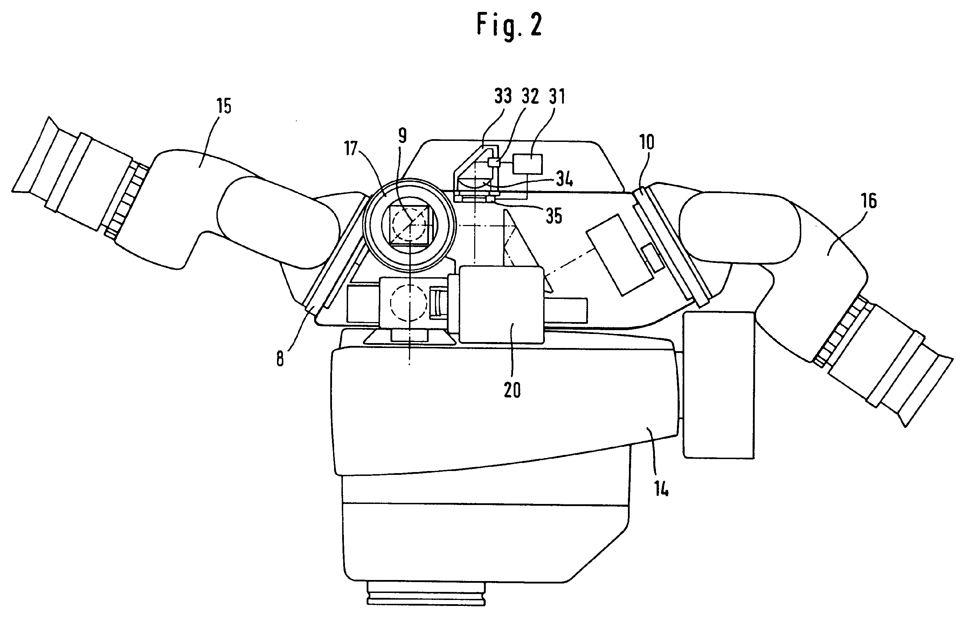

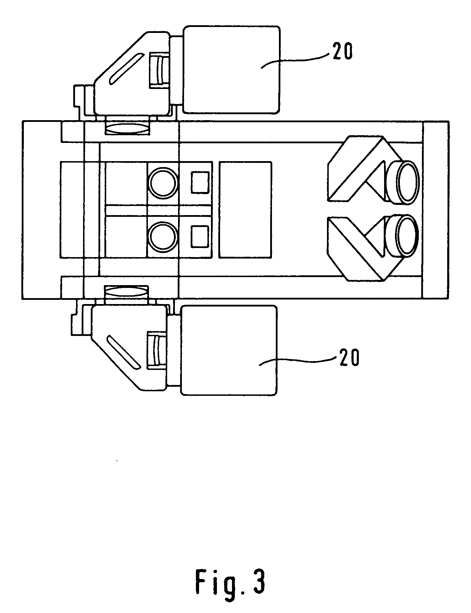

Direkt hinter den Eintrittsanschlüssen 1 sind erste Strahlenteiler 3 vorgesehen, mit denen ein kleiner Teil des Lichts, vorzugsweise 20% oder besser noch nur 10% seitlich, d.h. senkrecht aus der Papierebene herausgelenkt wird. Dieses Licht wird auf beiden Seiten der Observationseinrichtung in Videokameras 20 eingeleitet, die in den Fig. 2 und 3 gezeigt sind. Hinter den ersten Strahlenteilern 3 befinden sich Blenden 4, die mit Hilfe eines Hebels 5 oder einer elektromechanischen Steuerung 6 ganz oder teilweise geschlossen werden können, um das Licht 2 der Beobachtungsstrahlengänge abzuschwächen oder zu unterbrechen. Das durch die Blenden 4 hindurchgehende Licht fällt jeweils in ein erstes Prisma 21 mit einer Strahlenteilerfläche 22, durch die ein Lichtanteil 7 zu einer Einrichtung 8 zum Anschließen eines Beobachtungstubus für den Hauptbeobachter umlenkt. Der andere Teil des Lichts wird über eine drehbare Reflexionseinrichtung 9 über weitere optische Elemente zu einer Einrichtung 10 zum Anbringen eines Tubus für einen Mitbeobachter geleitet. Die Reflexionseinrichtung 9 ist dabei um eine Achse drehbar, die in Fig. 1 in der Papierebene liegt und vertikal steht. Wird diese Reflexionseinrichtung 9, die dort als Prisma ausgebildet ist, aber auch ein Spiegel sein könnte, um 90° gedreht, so wird dieser Strahlengang nicht zur Anschlußeinrichtung 10 gelenkt, sondern seitlich herausgelenkt, wo ein Mitbeobachtertubus oder eine Videokamera angeordnet sein kann.

Die Observationseinrichtung weist weiter eine Projektionseinheit auf, in der mit Hilfe von elektronischen Schaltungen 31 ein Bild erzeugt werden kann. Die Schaltung 31 speist dabei auch eine Lichtquelle 32 in Form z. B. einer Lampe oder einer LED, deren Licht bei 33 in eine Kollimatorlinse 34 z. B. diffus umgelenkt wird, die das Licht durch ein Durchsicht-Display 35 sendet, in der mit Hilfe der Schaltung 31 ein Bild erzeugt wird. Dieses Bild wird über eine Linse 13 und weitere in Fig. 1 gezeigte optische Elemente 1 in ein Prisma 23 geleitet, das mit dem Prisma 21 zusammengebaut ist und die Strahlenteilerfläche 22 gemeinsam hat. Ein Teil des von der Projektionseinheit 31-35 kommenden Lichts wird dabei in den Strahlengang 7 für den Hauptbeobachter gesandt, während der andere Teil über die Reflexionseinrichtung 9 entweder zur Anschlußeinrichtung für den Mitbeobachtertubus in den Strahlengang 19 für den Mitbeobachter oder aber zusammen mit dem Hauptstrahlengang seitlich herausgelenkt wird.

Die zusammengebauten Prismen 21, 23 mit gemeinsamer Grenzfläche 22, die als zweiter Strahlenteiler wirkt, teilen jeweils also sowohl den Hauptstrahlengang vom Mikroskop als auch den Strahlengang von den Projektionseinheiten 31-35 in Strahlengänge für den Hauptbeobachter und den Mitbeobachter auf. Dadurch, daß nur jeweils ein zweiter Strahlenteiler vorgesehen ist, erhält man eine kleinere Baugröße und außerdem den Vorteil geringerer Lichtverluste.

In Fig. 2 ist die erfindungsgemäße Observationseinrichtung im montierten Zustand gezeigt, in dem sie auf einem Operationsmikroskop 14 befestigt und Tuben 15 für den Hauptbeobachter und 16 für den Mitbeobachter aufweist. Dabei ist auch eine der Videokameras 20 gezeigt, die das Licht vom ersten Strahlenteiler 3 empfängt. Weiter ist ein Anschluß 17 gezeigt, an dem ein Mitbeobachtertubus oder eine Kamera angebracht werden kann, die das Licht über die Reflexionseinrichtung 9 erhalten, wenn diese gegenüber der in den Fig. 1 und 2 gezeigten Stellung um 90° gedreht ist.

Die seitliche Anordnung der Videokameras 20 ist in Fig. 3 deutlich ersichtlich, die die Observationseinrichtung mit angebauten Teilen von oben zeigt.

Die Display-Einheiten 35 weisen vorzugsweise 0,5 Zoll LCD-Einheiten auf. Zur Verringerung des optischen Wegs kann in jedem Strahlengang mindestens ein zusätzliches Glaselement angeordnet sein, das in Fig. 1 mit 18 bezeichnet ist. Dieses Glaselement 18 kann zweckmäßigerweise integraler Bestandteil des optischen Elementes sein, das aus den Prismen 21, 23 gebildet wird. Dadurch wird der optische Weg der Strahlengänge 2, 7 zum Hauptbeobachter und 2, 19 zum Mitbeobachter verringert.

Nicht gezeigt in den Figuren sind Einzelheiten der elektromechanischen Einrichtung 6, die einen Elektromagneten, einen Elektromotor, insbesondere einen Schrittmotor aufweisen kann, da solche Einrichtungen dem Fachmann wohlbekannt sind.

Ebenfalls nicht gezeigt sind Videokameras, die an der Einrichtung 17 der Reflexionseinrichtung 9 angebracht werden können, da solche Videokameras den Videokameras 20 entsprechen können. An der Einrichtung 17 kann auch ein Tubus angebracht werden, der einem der Tuben 15 oder 16 entspricht. Die Reflexionseinrichtung 9 kann dabei entweder als verspiegelte Glasplatte oder als Prisma mit Rückseitenverspiegelung oder Totalreflexion ausgeführt sein. Durch einen in der Abbildung nicht gezeigten Mechanismus kann die Reflexionseinrichtung 9 entweder mit einem Hebel von außen oder durch einen elektromotorischen oder elektromagnetischen Antrieb um 90° gedreht werden.

Wie dies bereits erwähnt wurde, kann die Observationseinrichtung aufgrund der gewählten optischen Anordnung sehr kompakt gehalten werden. So kann der Beobachtertubus 15 dicht am Mikroskopkörper gehalten werden. Auch können die Tuben 15, 16 ungefähr auf gleicher Höhe angebracht werden. Die Anschlüsse 8, 10 können dabei drehbar ausgebildet sein. Dadurch können die Okulare auch bei Schrägstellung des Mikroskop in horizontale Position gedreht werden, was für erhebliche Erleichterung für den Chirurgen sorgt.

Mit der Observationseinrichtung sind nun verschiedene Betriebsweisen möglich.
1. Ohne Einspiegelung von Information von der oder den Projektionseinheiten 35 wird das Licht optimal zwischen den beiden Kameras 20, dem Hauptbeobachter und dem Mitbeobachter verteilt. Befindet sich der Mitbeobachter auf der Seite, erhält er das Licht des einen optischen Kanals über die Reflexionseinrichtung 9, während das Licht des anderen optischen Kanals von einer weiteren Kamera, beispielsweise einer 35mm-Kamera genutzt werden kann. Ist der Mitbeobachter gegenüber dem Hauptbeobachter angeordnet, erhält er das Licht beider optischer Kanäle. Für Fotografie durch eine 35mm-Kamera kann dann kurzzeitig in einem der Beobachtungskanäle die Reflexionseinrichtung 9 zur seitlichen Umlenkung des Strahlengangs umgeschaltet werden.
2. Sollen Bilder oder Daten aus einem dem Operateur helfenden Navigationssystem eingeblendet werden, wird zusätzlich zu der in 1. beschriebenen Betriebsweise in einen oder beide Kanäle Licht von der Projektionseinheit 31-35 eingespiegelt.
3. Für die Beobachtung von Endoskopbildern wird die Blende 4 einseitig oder beidseitig geschlossen oder teilgeschlossen, so daß die direkte Sicht abgedunkelt oder völlig unterbrochen wird. Die Kameras 20 erhalten jedoch weiterhin Licht über die Strahlenteiler 3. Das Kamerasignal kann nur über eine externe elektronische Aufbereitung, die in den Figuren nicht gezeigt ist, mit dem Endoskopbild so gemischt werden, daß ein Fenster im Gesichtsfeld entsteht, in dem das Endoskopbild gezeigt wird. Die entsprechende Fenstertechnik ist heutzutage sowohl in der PC-Technik wie auch in der Fernsehtechnik bekannt.
4. Moderne Navigationssysteme erlauben die stereoskopische Einspiegelung von Tumoren, die sich unter der Gewebeoberfläche befinden. Der richtige Tiefeneindruck erfordert jedoch eine Kalibrierung mit dem aus der direkten Sicht stammenden stereoskopischen Bild. Eine solche Kalibrierung ist für die Mischung von Videobildern mit direkten Bildern sehr schwierig bis unmöglich. Durch Mischung in einer elektronischen Einheit können jedoch die aus den Kameras 20 kommenden Bilder über Landmarken so mit den Navigationsbildern verknüpft werden, daß eine realistische Tiefenschätzung der Tumorlage möglich ist.

Operationsmikroskope sind zwar normalerweise für stereoskopischen Betrieb ausgebildet und eingerichtet. Das Prinzip der Erfindung kann aber wie erwähnt nur in einem der beiden Beobachtungsstrahlengänge verwendet werden, wobei dann die betreffenden optischen Elemente jeweils nur einfach und nicht zweifach vorgesehen sein müssen. Diese Ausführungsform fällt ebenfalls in den Rahmen der Erfindung. Es ist auch möglich, die Projektionseinheit als separates Zusatzteil auszuführen, das ggf. später nachgerüstet werden kann. Auch wäre es denkbar, den bzw. die zweiten Strahlenteiler nicht einstückig auszubilden, sondern für jeden dieser Strahlenteiler zwei getrennte Strahlenteiler vorzusehen, was aber den Nachteil hat, daß dadurch die Baugröße anwächst und auch das Licht mehr abgeschwächt wird.

## Patentansprüche

1. Observationseinrichtung für ein stereoskopisches Operationsmikroskop mit Eintrittsanschlüssen (1) für die beiden Strahlengänge (2, 7, 19) vom Operationsmikroskop, mit Einrichtungen (8) zum Anschließen von Beobachtungstuben (15) für den Hauptbeobachter, und mit mindestens einer Projektionseinrichtung (31-35) zum Projizieren von mit mindestens einer Displayeinheit (35) erzeugten Bildern in den/die Beobachtungsstrahlengänge (2, 7, 19), mit mindestens einer Einrichtung zum Anschließen von mindestens einer Videokamera und mit Einrichtungen (10) zum Anschließen von Tuben (16) für einen Mitbeobachter, **dadurch gekennzeichnet, daß** in Richtung der Strahlengänge (2, 7, 19) gesehen in mindestens einem der beiden Strahlengänge hinter dem Eintrittsanschluß (1) ein erster Strahlenteiler (3) zum Ablenken eines Teils des Lichts des Beobachtungsstrahlengangs in eine Videokamera (20), dahinter eine schaltbare Blende (4) zum Abschwächen und/oder Unterbrechen des Lichts des Beobachtungsstrahlengangs und dahinter ein optisches Element (21, 23) mit einem zweiten Strahlenteiler (22) angeordnet ist, der das Licht des Beobachtungsstrahlengangs und das Licht von der Projektionseinrichtung (31-35) in zwei Strahlen für den Beobachtungstubus (15) und für den Mitbeobachtertubus (16) dieses Strahlengangs aufteilt.

2. Observationseinrichtung nach Anspruch 1, **dadurch gekennzeichnet, daß** in Richtung der Strahlengänge (2, 7, 19) gesehen in jedem der beiden Strahlengänge hinter dem Eintrittsanschluß (1) ein erster Strahlenteiler (3) zum Ablenken eines Teils des Lichts des Beobachtungsstrahlengangs in eine Videokamera (20), dahinter eine schaltbare Blende (4) zum Abschwächen und/oder Unterbrechen des Lichts des Beobachtungsstrahlengangs und dahinter ein optisches Element (21, 23) mit einem zweiten Strahlenteiler (22) angeordnet ist, der das Licht des Beobachtungsstrahlengangs und das Licht von der Projektionseinrichtung (31-35) in zwei Strahlen für den Beobachtungstubus (15) und für den Mitbeobachtertubus (16) dieses Strahlengangs aufteilt.

3. Observationseinrichtung nach Anspruch 1 oder 2, **dadurch gekennzeichnet, daß** die optischen Elemente zwei Prismen (21, 23) aufweisen, die an einer Fläche, die den zweiten Strahlenteiler (22) bildet, miteinander verbunden sind.

4. Observationseinrichtung nach Anspruch 3, **dadurch gekennzeichnet, daß** eines der Prismen (21, 23) ein Bauernfeind-Prisma ist.

5. Observationseinrichtung nach einem der Ansprüche 1 bis 4, **dadurch gekennzeichnet, daß** die Blende (4) von Hand (bei 5) betätigbar ist.

6. Observationseinrichtung nach einem der Ansprüche 1 bis 4, **dadurch gekennzeichnet, daß** die Blende (4) durch eine elektromechanische Einrichtung (6) betätigbar ist.

7. Observationseinrichtung nach Anspruch 6, **dadurch gekennzeichnet, daß** die elektromechanische Einrichtung (6) einen Elektromagneten, einen Elektromotor, insbesondere einen Schrittmotor aufweist.

8. Observationseinrichtung nach einem der Ansprüche 1 bis 7, **dadurch gekennzeichnet, daß** die ersten Strahlenteiler (3) als geometrische Strahlenteiler ausgebildet sind, deren Lichtauskopplung geringer als 20 Prozent, vorzugsweise geringer als 10 Prozent ist.

9. Observationseinrichtung nach einem der Ansprüche 1 bis 8, **dadurch gekennzeichnet, daß** die optische Elemente (21, 23) zur Verringerung des optischen Wegs mindestens ein zusätzliches Glaselement (18) im Strahlengang aufweisen.

10. Observationseinrichtung nach einem der Ansprüche 1 bis 9, **dadurch gekennzeichnet, daß** die Displayeinheiten (35) LCD-Einheiten aufweisen.

11. Observationseinrichtung nach einem der Ansprüche 1 bis 10, **dadurch gekennzeichnet, daß** in mindestens einem der Strahlengänge eine drehbare Reflexionseinrichtung (9) vorgesehen ist, mit der das Licht zu einem gegenüber dem Hauptbeobachter angeordneten Mitbeoachtertubus (16) oder zu einer seitlich angeordneten Beobachtungseinrichtung umlenkbar ist.

12. Observationseinrichtung nach Anspruch 11, **dadurch gekennzeichnet, daß** eine Beobachtungseinrichtung ein Tubus für einen Mitbeobachter ist.

13. Observationseinrichtung nach Anspruch 11 oder 12, **dadurch gekennzeichnet, daß** eine Beobachtungseinrichtung eine Kamera ist.

14. Observationseinrichtung nach einem der Ansprüche 1 bis 13, **dadurch gekennzeichnet, daß** sie als demontierbares Modul ausgebildet ist.
